# EUROPÄISCHE PATENTANMELDUNG

(11) **EP 3 770 515 A1**
(43) Veröffentlichungstag der Anmeldung: **27.01.2021**
(21) Anmeldenummer: 20186159.8
(22) Anmeldetag: 16.07.2020
(51) Int. Cl.: F24D 19/00

(54) **VERFAHREN ZUR HERSTELLUNG EINES PLATTENHEIZKÖRPERS SOWIE PLATTENHEIZKÖRPER**

(30) Priorität: 22.07.2019 DE 102019119758
(71) Anmelder: Caradon Stelrad B.V., 2200 Herentals (BE)
(72) Erfinder: Berthet, Sylvain, 3190 Boortmeerbeek (BE)
(74) Vertreter: Bauer, Dirk

(57) **Zusammenfassung**

Die Erfindung betrifft Verfahren zur Herstellung eines Plattenheizkörpers (1), der Plattenheizkörper (1) umfassend
- mindestens eine Heizplatte (2) mit einem Verteilkanal (8), einem Sammelkanal (9) und einer Mehrzahl von zwischen dem Verteilkanal (8) und dem Sammelkanal (9) sowie ungefähr senkrecht zu den beiden verlaufenden Heizkanälen (7),
- zwei voneinander beabstandete und mittels eines Vorlaufrohres (17) miteinander verbundene Vorlauf-Anschlussstücke (13, 14), jeweils zum Anschluss an einen Heizfluid-Vorlauf sowie zwei mit der mindestens einen Heizplatte (2) im Bereich des Sammelkanals (9) strömungsmäßig verbundene Rücklauf-Anschlussstücke (15, 16), jeweils zum Anschluss an einen Heizfluid-Rücklauf, wobei die Vorlauf-Anschlussstücke (13, 14), die Rücklauf-Anschlussstücke (15, 16) und das Vorlaufrohr (17) zu einer Vorlauf-Rücklauf-Garnitur (3) verbunden sind,
- eine Steiggarnitur (4), die mindestens ein strömungsmäßig mit dem Verteilkanal (8) verbundenes Verteil-Anschlussstück (34) aufweist, das mittels eines Steigrohrs (33) an einem der Vorlauf-Anschlussstücke (13, 14) der Vorlauf-Rücklauf-Garnitur (3) befestigt ist, wobei das Steigrohr (33) an einem dem Verteil-Anschlussstück (34) abgewandten Ende strömungsmäßig mit einem der Vorlauf-Anschlussstücke (13, 14) der Vorlauf-Rücklauf-Garnitur (3) verbunden ist,
mit den folgenden Verfahrensschritten:
- Die Vorlauf-Rücklauf-Garnitur (3) wird zumindest an den Rücklauf-Anschlussstücken (15, 16) mit der mindestens einen Heizplatte (2) durch Schweißen verbunden
- Die Steiggarnitur (4) wird mit der Vorlauf-Rücklauf-Garnitur (3) verbunden
- Die Steiggarnitur (4) wird an ihrem Verteil-Anschlussstück (34) mit der mindestens einen Heizplatte (2) durch Schweißen verbunden,

Um ein alternatives Verfahren zur Herstellung eines Plattenheizkörpers bereitzustellen, wird erfindungsgemäß vorgesehen, dass die Steiggarnitur (4) mit einem Endabschnitt des Steigrohres (33) in ein Muffenstück (46) der Vorlauf-Rücklauf-Garnitur (3) dichtend eingeschoben oder die Steiggarnitur (4) mit einem an einem dem Verteil-Anschlussstück (34) abgewandten Endabschnitt des Steigrohres (33) angeordneten Muffenstück (38) auf ein freies Ende (43) eines Rohres (28), das strömungsmäßig mit einem der Vorlauf-Anschlussstücke (13, 14) verbunden ist, aufgeschoben ist.

## Beschreibung

Die Erfindung betrifft ein Verfahren zur Herstellung eines Plattenheizkörpers, der Plattenheizkörper umfassend
- mindestens eine Heizplatte mit einem Verteilkanal, einem Sammelkanal und einer Mehrzahl von zwischen dem Verteilkanal und dem Sammelkanal sowie ungefähr senkrecht zu den beiden verlaufenden Heizkanälen,
- zwei voneinander beabstandete und mittels eines Vorlaufrohres miteinander verbundene Vorlauf-Anschlussstücke, jeweils zum Anschluss an einen Heizfluid-Vorlauf sowie zwei mit der mindestens einen Heizplatte im Bereich des Sammelkanals strömungsmäßig verbundene Rücklauf-Anschlussstücke, jeweils zum Anschluss an einen Heizfluid-Rücklauf, wobei die Vorlauf-Anschlüssstücke, die Rücklauf-Anschlussstücke und das Vorlaufrohr zu einer Vorlauf-Rücklauf-Garnitur verbunden sind,
- eine Steiggarnitur, die mindestens ein strömungsmäßig mit dem Verteilkanal verbundenes Verteil-Anschlussstück aufweist, das mittels eines Steigrohrs an einem der Vorlauf-Anschlussstücke der Vorlauf-Rücklauf-Garnitur befestigt ist, wobei das Steigrohr an einem dem Verteil-Anschlussstück abgewandten Ende strömungsmäßig mit einem der Vorlauf-Anschlussstücke der Vorlauf-Rücklauf-Garnitur verbunden ist,
mit den folgenden Verfahrensschritten:
- Die Vorlauf-Rücklauf-Garnitur wird zumindest an den Rücklauf-Anschlussstücken mit der mindestens einen Heizplatte durch Schweißen verbunden
- Die Steiggarnitur wird mit der Vorlauf-Rücklauf-Garnitur verbunden
- Die Steiggarnitur wird an ihrem Verteil-Anschlussstück mit der mindestens einen Heizplatte durch Schweißen verbunden.

Des Weiteren betrifft die Erfindung einen Plattenheizkörper der vorstehend beschriebenen Art.

In aller Regel werden Plattenheizkörper in Randbereichen eines zu beheizenden Raums installiert, so beispielsweise unter einem Fenster. Die Heizplatte des Plattenheizkörpers wird in einem angeschlossenen Zustand von einem erwärmten Heizfluid durchflossen und gibt die hierbei aufgenommene Wärme mittels Konvektion und Wärmestrahlung an den Raum ab, welcher sich infolgedessen erwärmt. In aller Regel erfolgt die Zufuhr des Heizfluids über ein im Gebäude des Raums installiertes Heizungsrohrsystem. Die in dem Raum endenden Abschnitte der Heizungsrohre bilden hierbei den Heizfluid-Vorlauf und Heizfluid-Rücklauf, wobei das Heizfluid dem Heizkörper über den Heizfluid-Vorlauf zugeführt und nach erfolgter Wärmeübertragung über den Heizfluid-Rücklauf aus diesem abgelassen wird. Je nach Anordnung der Heizungsrohre werden entsprechende Vorlauf- und Rücklauf-Anschlussstücke zur Verbindung mit dem Heizfluid-Vorlauf und Heizfluid-Rücklauf ausgewählt. Üblicherweise erfolgt die Verbindung hierbei mittels Schweißen. Das Heizfluid, typischerweise Wasser, wird dem Verteilkanal, welcher üblicherweise in einem oberen Bereich des Plattenheizkörpers angeordnet ist, zugeführt.

### Stand der Technik

Plattenheizkörper der vorstehend beschrieben Art sind in dem Stand der Technik in einer Vielzahl bekannt.

So geht aus der DE 20 2007 006 126 U1 bzw. der DE 10 2007 020 628 A1 eine Vorlauf-Rücklauf-Garnitur eines Plattenheizkörpers hervor, welche sich dazu eignen soll, durch die Temperatur des Heizmediums bedingte Ausdehnungen des Vorlaufrohrs zu kompensieren, um auf diese Weise spannungsbedingte Risse und Undichtigkeiten des Heizkörpers zu vermeiden. Die Anschlussgarnitur ist aus zwei Vorlauf-Anschlussstücken, zwei Rücklauf-Anschlussstücken sowie einem diese verbindenden Vorlaufrohr gebildet. Die Längenkompensation soll hierbei dadurch erfolgen, dass das Ende des Vorlaufrohrs erweitert ist und in einen Stutzen des zweiten Vorlauf-Anschlussstücks eingeführt ist. Um hierbei eine flüssigkeitsdichte Verbindung herzustellen und dabei eine Relativbewegung des Vorlaufrohrs zu dem Vorlauf-Anschlussstück zu erlauben, ist das vorstehend beschriebene Ende des Vorlaufrohres mit einem umlaufenden Dichtring versehen. Ein Steigrohr, welches dazu dienen soll, das Heizfluid zu dem Verteilkanal des Plattenheizkörpers zu befördern, ist an einem Ende mit einer wulstartigen Verdickung versehen, die an dem Rand einer Aufnahmebohrung des zweiten Vorlauf-Anschlussstücks anschlägt und mit letzterem mittels Schweißen fest verbunden ist. Vorteilhafter Weise ist das Steigrohr auch ohne die angesteckte Vorlauf-Rücklauf-Garnitur verwendbar (die Öffnung wird dann mittels eines Verschlusselements in Form eines Stutzens verschlossen), wenn auf einen unteren Mittenanschluss verzichtet werden kann und es ausreichend ist, dass der Heizkörper lediglich über einen unteren Eckanschluss verfügt. Dies macht die Produktion unter Verwendung vieler Gleichteile effizient.

Aus dem deutschen Gebrauchsmuster DE 298 06 382 U1 geht eine Anschlussgarnitur für einen Plattenheizkörper hervor, bestehend aus einem Vorlauf-Anschlussstück, einem Rücklauf-Anschlussstück sowie einer Steiggarnitur. Ferner besitzt die Anschlussgarnitur ein Rohr zur Verbindung des Rücklauf-Anschlussstücks mit dem Sammelkanal des Plattenheizkörpers. Dabei sind ein Steigrohr der Steiggarnitur und das vorstehend beschriebene verbindende Rohr jeweils aus zwei Rohrabschnitten gebildet, welche mittels einer Steckverbindung miteinander verbunden werden. Die Steckverbindung kann hierbei als separate Hülse, welche über die beiden benachbarten Enden der Rohrabschnitte gestülpt wird oder derart ausgebildet sein, dass ein Ende eines Rohrabschnitt mit einer muffenartigen Erweiterung versehen ist, welche es ermöglicht, das Ende des anderen Rohrabschnitts zu umfassen. Um hierbei eine dichte Verbindung herzustellen, ist das Muffenende mit einem inneren Dichtelement oder die Hülse mit zwei solchen Dichtelementen versehen. Die beschriebene Anschlussgarnitur soll die Montage des Plattenheizkörpers erleichtern und gleichzeitig beschleunigen.

Ferner beschreibt die deutsche Patentanmeldung DE 197 11 074 A1 eine Vorrichtung in Form eines Rohrs zum Anschluss eines Heizkörpers an ein Heizungsrohrsystem. Dabei ist ein Verbindungsstück des Rohres derart zweiteilig ausgebildet, dass ein Innenrohr teleskopartig und flüssigkeitsdicht in einem Außenrohr verschiebbar ist. Es ist vorgesehen, mittels der Verschiebung der beiden Rohre das Verbindungsstück in seiner Länge an die Länge des Heizkörpers anpassen zu können. Um eine flüssigkeitsdichte Verbindung der beiden Rohre zu gewährleisten, besitzt das Verbindungsstück eine Ringdichtung. Ferner ist vorgesehen, dass das Innenrohr gegenüber dem Außenrohr, mittels einer Verschraubung, mittels Verklebung, Verklemmung, Verlötung und/oder Verpressung, arretierbar ist. Der Heizkörper selbst umfasst allerdings kein Teleskoprohr.

### Aufgabe

Es ist Aufgabe der vorliegenden Erfindung, ein alternatives Verfahren zur Herstellung eines Plattenheizkörpers zu entwickeln. Diese Aufgabe soll analog für den erfindungsgemäßen Plattenheizkörper erfüllt werden.

### Lösung

Ausgehend von dem eingangs genannten Verfahren zur Herstellung eines Plattenheizkörpers wird die vorstehende Aufgabe dadurch gelöst, dass die Steiggarnitur mit einem Endabschnitt des Steigrohres in ein Muffenstück der Vorlauf-Rücklauf-Garnitur dichtend eingeschoben oder die Steiggarnitur mit einem an einem dem Verteil-Anschlussstück abgewandten Ende des Steigrohres angeordneten Muffenstück auf ein freies Ende eines Rohres, das strömungsmäßig mit einem der Vorlauf-Anschlussstücke verbunden ist, aufgeschoben wird.

Das erfindungsgemäße Verfahren hat viele Vorteile. Ein besonderer Vorteil des erfindungsgemäßen Verfahrens besteht darin, dass die Steiggarnitur besonders einfach, insbesondere ohne weitere mechanische Umformungsschritte der selbigen oder des Vorlauf-Anschlussstücks, dichtend mit dem Vorlauf-Anschlussstück verbunden werden kann, um das Heizfluid in die Heizplatte zu leiten. Somit ist es möglich, beide Garnituren des erfindungsgemäßen Plattenheizkörpers besonders einfach und schnell zusammen zu "stecken". Im Vergleich zu den im Stand der Technik bekannten Plattenheizkörpern wird die Herstellung derselben somit vorteilhafterweise vereinfacht.

Darüber hinaus kann die erfindungsgemäße Vorlauf-Rücklauf-Garnitur mit Heizplatten verschiedener Höhe gekoppelt werden. So ist vorstellbar, dass die Steiggarnitur bei einer niedrigen Heizplatte, welche beispielsweise unter einem Fenster angebracht werden soll, mit einem hierfür im Hinblick auf die Länge angepassten Steigrohr versehen ist. Hierdurch entfällt eine aufwendige Anpassung der Vorlauf-Rücklauf-Garnitur auch bei einer großen Anzahl anzubietender Heizkörperhöhen. Es versteht sich, dass eine solche Anpassungsmöglichkeit insbesondere im Hinblick auf die Herstellung des Plattenheizkörpers besonders vorteilhaft ist, da der Herstellungsaufwand im Hinblick auf die Vielfalt der herzustellenden Komponenten vermindert werden kann.

Es ist gemäß einem weiteren Merkmal der Erfindung vorgesehen, dass der Plattenheizkörper zwei Heizplatten umfasst und die zweite Heizplatte durch Schweißen mit mindestens einem der Rücklauf-Abschlussstücke der Vorlauf-Rücklauf-Garnitur und dem Verteil-Anschlussstück der Steiggarnitur verbunden wird.

Insbesondere bei der Beheizung von großen Räumen sind Plattenheizkörper mit zwei oder mehr Heizplatten besonders vorteilhaft. Durch die schweißtechnische Verbindung der zweiten Heizplatte mit der Vorlauf-Rücklauf-Garnitur, welche bereits mit der ersten Heizplatte verbunden ist, wird erzielt, dass lediglich eine Vorlauf-Rücklauf-Garnitur erforderlich ist. Ein derartiger Plattenheizkörper kann somit insbesondere platzsparend in dem Raum installiert werden. Ferner werden keine weiteren Anschlüsse, insbesondere kein weiterer Heizfluid-Vorlauf sowie ein Heizfluid-Rücklauf, in dem Raum benötigt. Die Vorlauf-Rücklauf-Garnitur und die Steiggarnitur sind dann von außen unsichtbar, im Innern des Heizkörpers angeordnet.

Die anfangs genannte Aufgabe wird ausgehend von einem Plattenheizkörper der eingangs beschriebenen Art erfindungsgemäß dadurch gelöst, dass die Steiggarnitur mit einem Endabschnitt des Steigrohres in ein Muffenstück der Vorlauf-Rücklauf-Garnitur dichtend eingeschoben oder die Steiggarnitur mit einem an einem dem Verteil-Anschlussstück abgewandten Endabschnitt des Steigrohres angeordneten Muffenstück auf ein freies Ende eines Rohres, das strömungsmäßig mit einem der Vorlauf-Anschlussstücke verbunden ist, aufgeschoben ist.

Die in Bezug auf das erfindungsgemäße Verfahren genannten Vorteile werden analog mittels des vorbeschriebenen Plattenheizkörpers erzielt.

Gemäß einer vorteilhaften Ausgestaltung der Erfindung ist vorgesehen, dass das Muffenstück der Vorlauf-Rücklauf-Garnitur oder das Muffenstück an dem Endabschnitt des Steigrohrs der Steiggarnitur, vorzugsweise in einem angepassten, sich radial nach außen gegenüber dem übrigen Muffendurchmesser erweiternden Abschnitt ein Dichtelement, vorzugsweise in Form eines aus einem elastomeren Material bestehenden Dichtungsrings, weiter vorzugsweise eines O-Rings angeordnet ist.

Der Innendurchmesser des Muffenstücks entspricht dabei in etwa dem Außendurchmesser des Steigrohres bzw. des freien Ende des Rohres, welches strömungsmäßig mit einem der Vorlauf-Anschlussstücke verbunden ist. Es versteht sich, dass die Anordnung eines Dichtelements in dem vorstehend beschriebenen Abschnitt insbesondere im Hinblick auf eine dichtende Verbindung zwischen dem Steigrohr und der Vorlauf-Rücklauf-Garnitur besonders vorteilhaft ist. Insbesondere wird es hierdurch ermöglicht, das Steigrohr einerseits oder das freie Ende des Rohres andererseits ohne weitere Umformungsschritte oder besondere Befestigungsmittel mit dem jeweiligen Muffenstück zu verbinden und hierbei eine dichte Verbindung zu erzielen.

Gemäß einem weiteren Merkmal der Erfindung ist vorgesehen, dass das Muffenstück bis auf einen sich radial nach außen gegenüber dem übrigen Muffendurchmesser erweiterten Kragen bündig in einen Strömungsraum eines Vorlauf-Anschlussstücks eingesetzt ist.

Das Muffenstück ist vorzugsweise hohlzylinderförmig ausgebildet und in den Strömungsraum des ersten Vorlauf-Anschlussstücks eingesetzt. Der Strömungsraum ist vorzugsweise strömungsmäßig mit dem Vorlaufrohr, welches strömungsmäßig mit dem zweiten Vorlauf-Anschlussstück verbunden ist, und dem Heizfluid-Vorlauf des ersten Vorlauf-Anschlussstücks verbunden. Folglich wird der Strömungsraum von dem mittels des Heizfluid-Vorlaufs zugeführten, erwärmten Heizfluid durchflossen. Um eine bestimmte Einbauposition des Muffenstücks in dem Vorlauf-Anschlussstück zu gewährleisten, ist das Muffenstück mit dem Kragen versehen, dessen Durchmesser gegenüber dem übrigen Muffendurchmesser erweitert ist. Hierdurch wird das Muffenstück beim Einlassen in das Vorlauf-Anschlussstück an einem Gehäuse des Vorlauf-Anschlussstücks gehalten.

Eine besonders vorteilhafte Weiterentwicklung des erfindungsgemäßen Plattenheizkörpers sieht vor, dass das Verteil-Anschlussstück mit einem Verbindungsstück zur strömungsmäßigen Verbindung mit einem Heizfluid-Vorlauf versehen ist. Ferner sieht eine vorteilhafte Ausgestaltung der Erfindung sieht vor, dass die Vorlauf-Rücklauf-Garnitur mit mindestens zwei, vorzugsweise drei, Verbindungsstücken zur strömungsmäßigen Verbindung mit einem Heizfluid-Rücklauf versehen ist.

Die Anschlussmöglichkeiten des Plattenheizkörpers ergeben sich somit wie folgt:
In jedem Fall werden jeweils ein Vorlauf-Anschlussstück und ein Rücklauf-Anschlussstück mit dem Heizfluid-Rücklauf bzw. dem Heizfluid-Vorlauf verbunden.

Bei der ersten Anschlussmöglichkeit handelt es sich um einen Mittenanschluss. Der Anschluss an das Heizungsrohrsystem erfolgt über das erste Vorlauf-Anschlussstück und das erste Rücklauf-Anschlussstück. Dabei wird das Heizfluid über das Vorlaufrohr, welches strömungsmäßig mit dem Steigrohr verbunden ist, in die Heizplatte eingeleitet. Das Heizfluid wird über beide Rücklauf-Anschlussstücke, welche strömungsmäßig mit einem mittleren bzw. einem äußeren Auslassbohrung der Heizplatte verbunden ist, abgelassen.

Gemäß einer vorzugsweisen Ausgestaltung der Erfindung ist vorgesehen, dass mindestens ein Rücklauf-Anschlussstück in einem angeschlossenen Zustand in einem Eckbereich der Heizplatte angeordnet ist. Soll der Anschluss beispielsweise in einem Eckbereich des Raumes oder einer Nische erfolgen, können die weiteren Anschlussmöglichkeiten genutzt werden.

Enden die Heizungsrohre in einem Bodenbereich des Raumes, wird das zweite Rücklauf-Anschlussstück mit dem Heizfluid-Rücklauf einerseits und der Heizplatte andererseits verbunden. Die Verbindung erfolgt hierbei in einem Randbereich der Heizplatte. Das zweite Vorlauf-Anschlussstück wird mit dem Heizfluid-Vorlauf verbunden. Das Heizfluid wird über das Steigrohr in die Heizplatte eingeleitet und verlässt den Heizkörper über das zweite Rücklauf-Anschlussstück.

Für den Fall, dass der Heizfluid-Vorlauf und der Heizfluid-Rücklauf in der Wand, insbesondere in einer seitlichen Begrenzungswand einer Heizkörpernische, angeordnet sind, wird das Verbindungsstück des Verteil-Anschlussstücks mit dem Heizfluid-Vorlauf verbunden, während das zweite Rücklauf-Anschlussstück mit dem Heizfluid-Rücklauf verbunden wird. Hierbei erfolgt die Zufuhr der Heizfluids mittelbar über das Verteil-Anschlussstück.

Schließlich kann noch vorgesehen sein, dass die Vorlauf-Anschlussstücke, die Rücklauf-Anschlussstücke und das Vorlaufrohr fest, insbesondere stoffschlüssig, insbesondere durch Schweißen, Löten oder Kleben, oder reibschlüssig, insbesondere durch Verpressen, zu der Vorlauf-Rücklauf-Garnitur verbunden sind, so dass eine Längenänderung in Richtung des Vorlaufrohrs unterbunden ist. Auf das dichtende Aufschieben oder Einschieben des Vorlaufrohrs erst im Rahmen der Endmontage des Heizkörpers kann somit an dieser Stelle verzichtet werden, wodurch die Gefahr möglicher Undichtigkeiten im Bereich der Vorlauf-Rücklauf-Garnitur im Vergleich mit einer längenvariablen Teleskopverbindung reduziert werden kann.

### Ausführungsbeispiel:

Die vorstehend beschriebene Erfindung wird nachfolgend anhand von drei Ausführungsbeispielen, die in den Figuren dargestellt sind, näher erläutert.

Es zeigt:
- Figur 1:: eine perspektivische Ansicht einer erfindungsgemäßen Heizplatte sowie eine erfindungsgemäße Vorlauf-Rücklauf-Garnitur,
- Figur 2:: wie Figur 1, mit einer erfindungsgemäßen Steiggarnitur,
- Figur 3: eine perspektivische Ansicht einer weiteren erfindungsgemäßen Heizplatte, einer Vorlauf-Rücklauf-Garnitur sowie einer Steiggarnitur,
- Figur 4:: eine weitere erfindungsgemäße Steiggarnitur sowie eine Vorlauf-Rücklauf-Garnitur und
- Figur 5:: einen vertikalen Schnitt durch die Vorlauf-Rücklauf-Garnitur sowie durch die Steiggarnitur aus Figur 4.

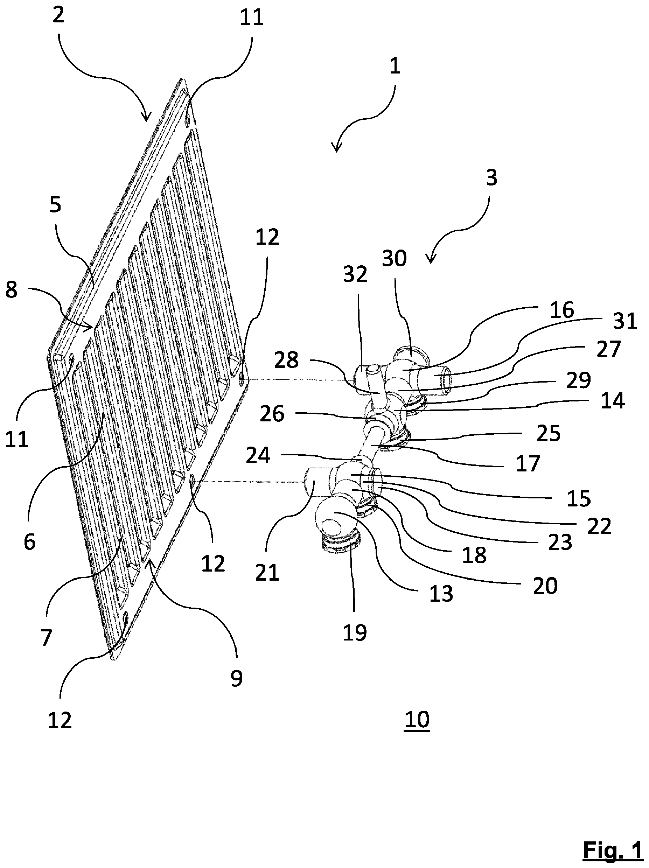

Der erfindungsgemäße Plattenheizkörper 1, welcher in den Figuren 1 bis 5 dargestellt ist, umfasst zwei Heizplatten 2, eine Vorlauf-Rücklauf-Garnitur 3 sowie eine Steiggarnitur 4. Zur besseren Übersicht ist lediglich eine der beiden Heizplatten 2, nämlich die "hintere", die im eingebauten Zustand des Plattenheizkörpers 1 vorzugsweise einer Wand eines Gebäudes zugewandt ist, in den Figuren dargestellt.

Figur 1 zeigt eine erste Heizplatte 2 sowie die Vorlauf-Rücklauf-Garnitur 3.

Die Heizplatten 2 des Plattenzheizkörpers 1 sind jeweils aus zwei, in einem Randbereich miteinander verbundenen Blechen 5, insbesondere aus Stahl, gebildet. Die Bleche 5 sind in einem mittleren Bereich derart umgeformt, dass die selbigen jeweils mit länglichen, wannenartigen Vertiefungen 6 versehen sind. Die jeweiligen Bodenflächen der Vertiefungen 6 liegen in einem verbundenen Zustand der Bleche 5 deckungsgleich und flüssigkeitsdicht aneinander. Die im Hinblick auf die Bodenflächen erhöhten Randbereiche der Vertiefungen 6 bilden hohl ausgeformte Heizkanäle 7 aus, welche strömungsmäßig mit einem Verteilkanal 8 einerseits und einem Sammelkanal 9 andererseits verbunden sind. Der Verteilkanal 8 sowie der Sammelkanal 9 sind jeweils als länglicher Hohlraum ausgebildet und in einem der beiden, horizontal verlaufenden Randbereiche der Heizplatte 2 angeordnet. Während der Sammelkanal 9 in einem unteren Randbereich der Heizplatte 2 angeordnet ist, befindet sich der Verteilkanal 8 in einem oberen Randbereich der Heizplatte 2.

Ein Heizfluid, welches dazu dient, die Heizplatte 2 - und damit den umliegenden Raum 10 - zu erwärmen, kann über den Verteilkanal 8 in die Heizkanäle 7 eingeleitet werden. Das Heizfluid strömt in die Heizkanäle 7 und erwärmt die beiden Bleche 5. Die an die Bleche 5 übertragene Wärme des Heizfluids wird mittels Konvektion und Wärmestrahlung an den Raum 10 abgegeben. Das abgekühlte Heizfluid sammelt sich schließlich in dem im unteren Bereich der Heizplatte 2 angeordneten Sammelkanal 9. Um die Heizplatte 2 mit dem Heizfluid, typischerweise Wasser, zu versorgen und dieses nach einem Abkühlen des selbigen wieder aus der Heizplatte 2 ableiten zu können, ist die Heizplatte 2 mit Ein- und Auslassbohrungen 11, 12 versehen, welche zur Verbindung der Heizplatte 2 mit der erfindungsgemäßen Vorlauf-Rücklauf-Garnitur 3 sowie der erfindungsgemäßen Steiggarnitur 4 vorgesehen sind. Die Ein- und Auslassbohrungen 11, 12 sind derart an der Heizplatte 2 angeordnet, dass eine Befestigung der beiden Garnituren 3, 4 symmetrisch erfolgen kann. Hierzu besitzen die Heizplatten 2 zwei Einlassbohrungen 11, welche jeweils in einem Randbereich des Verteilkanals 8 angeordnet sind, sowie drei Auslassbohrungen 12, welche jeweils in einem Randbereich sowie in der Mitte des Sammelkanals 9 angeordnet sind.

Die Vorlauf-Rücklauf-Garnitur 3 umfasst zwei Vorlauf-Anschlussstücke 13, 14 sowie zwei Rücklauf-Anschlussstücke 15, 16. Die beiden Vorlauf-Anschlussstücke 13, 14 und die beiden Rücklauf-Anschlussstücke 15, 16 besitzen jeweils einen kugelabschnittsförmigen, hohlen Grundkörper, welcher in einem angeschlossenen Zustand der Vorlauf-Rücklauf-Garnitur 3 an einem Heizfluid-Vorlauf und einem Heizfluid-Rücklauf, welche in dem zu beheizenden Raum 10 angeordnet sind, von dem Heizfluid durchflossen wird. Dabei sind die beiden Vorlauf-Anschlussstücke 13, 14 mittels eines Vorlaufrohres 17 strömungsmäßig miteinander verbunden.

Das erste Vorlauf-Anschlussstück 13 ist mit einem Verbindungsstutzen 18 und einem Verbindungsstück 19 versehen. Der Verbindungsstutzen 18 dient zur schweißtechnischen Verbindung des ersten Vorlauf-Anschlussstücks 13 mit dem ersten Rücklauf-Anschlussstück 15. Eine strömungsmäßige Verbindung erfolgt hierbei jedoch lediglich über das die beiden Vorlauf-Anschlussstücke 13, 14 verbindende Vorlaufrohr 17, welche durch das erste Rücklauf-Anschlussstück 15 hindurch geführt ist. Das Verbindungsstück 19, welches an einer Unterseite des Grundkörpers angeordnet ist, dient zur strömungsmäßigen Verbindung des ersten Vorlauf-Anschlussstückes 13 mit dem Heizfluid-Vorlauf des Raumes 10 und ist mit einem Innengewinde versehen. Ferner ist eine dem Verbindungsstutzen 18 abgewandte Seitenfläche des Grundkörpers abgeflacht ausgebildet.

Das erste Rücklauf-Anschlussstück 15 ist ebenfalls mit einem Verbindungsstück 20 versehen. Das an der Unterseite des Grundkörpers angeordnete Verbindungsstück 20 dient hierbei zum Anschluss des Rücklauf-Anschlussstücks 15 an den Heizfluid-Rücklauf des Raumes 10 und ist ebenfalls mit einem Innengewinde versehen. Ferner besitzt das Rücklauf-Anschlussstück 15 zwei Anschlussstutzen 21, 22. Die Anschlussstutzen 21, 22 sind mit ihren Symmetrieachsen senkrecht zu einer Symmetrieachse des Verbindungsstücks 20 und parallel zueinander angeordnet. Es ist hierbei vorgesehen, die Anschlussstutzen 21, 22 jeweils an einer Heizplatte 2 zu befestigen und hierdurch eine strömungsmäßige Verbindung mit den Heizplatten 2 zu erzielen. Soll die Vorlauf-Rücklauf-Garnitur 3 derart an der Heizplatte 2 angebracht werden, dass das erste Rücklauf-Anschlussstück 15 schweißtechnisch mit der mittleren Auslassbohrung 12 der Heizplatte 2 verbunden wird, ist vorgesehen, den der Heizplatte 2 abgewandten Anschlussstutzen 22 mittels einer Kappe 23 zu verschließen.

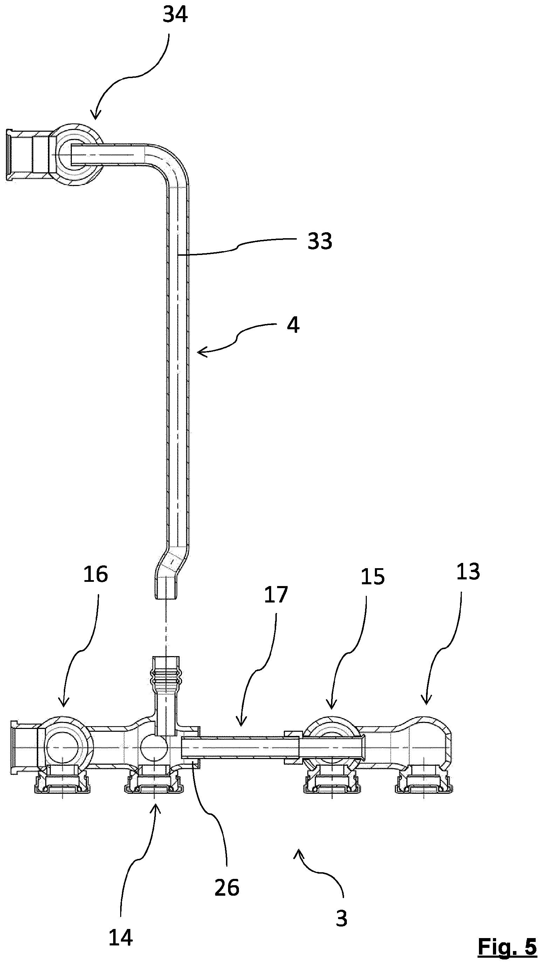

Das erste Rücklauf-Anschlussstück 15 ist ebenfalls mit einem Verbindungsstutzen 24 versehen. Der Verbindungsstutzen 24 dient zur Führung des die beiden Vorlauf-Anschlussstücke 13, 14 verbindenden Vorlaufrohres 17. Das Vorlaufrohr 17, welches von dem zweiten Vorlauf-Anschlussstück 14 ausgeht, ist hierbei, wie in Figur 5 dargestellt, durch Öffnungen in dem Grundkörper des ersten Rücklauf-Anschlussstücks 15 hindurch geführt. Ein Ende des Vorlaufrohres 17 ist hierbei in dem Verbindungsstutzen 24 des ersten Rücklauf-Anschlussstückes 15 angeordnet.

Das zweite Vorlauf-Anschlussstück 14 besitzt ebenfalls ein an der Unterseite des Grundkörpers angeordnetes Verbindungsstück 25 zur alternativen Verbindung mit einem Heizfluid-Vorlauf. Ferner ist das Vorlauf-Anschlussstück 14 mit zwei sich gegenüberliegenden Verbindungsstutzen 26, 27 versehen. Ein erster Verbindungsstutzen 26 dient hierbei zur Führung des Vorlaufrohres 17. Ein Ende des Vorlaufrohres 17 ist hierbei, wie in Figur 5, gezeigt in dem Verbindungsstutzen 26 angeordnet. Der andere Verbindungsstutzen 27 dient zur Verbindung mit dem zweiten Rücklauf-Anschlussstück 16. Der Verbindungsstutzen 27 ist hierbei mit dem Grundkörper des zweiten Rücklauf-Anschlussstückes 16 verschweißt. An einer Oberseite des Grundkörpers ist das zweite Vorlauf-Anschlussstück 14 mit einem Rohr 28 versehen ist, das strömungsmäßig mit dem zweiten Vorlauf-Anschlussstück 14 verbunden ist und an seinem freien Ende konisch zuläuft.

Das zweite Rücklauf-Anschlussstück 16 besitzt ebenfalls ein Verbindungsstück 29 zum Anschluss an einen Heizfluid-Rücklauf, welches an einer Unterseite des Grundkörpers angeordnet und mit einem Innengewinde versehen ist. Darüber hinaus besitzt das Rücklauf-Anschlussstück 16 ein Verbindungsstück 30, welches ebenfalls zur Verbindung mit einem Heizfluid-Rücklauf vorgesehen und ebenfalls mit einem Innengewinde versehen ist, dessen Symmetrieachse senkrecht zu der Symmetrieachse des ersten Verbindungsstücks 29 verläuft. Letzteres Verbindungsstück 30 eignet sich insbesondere zur Montage der Vorlauf-Rücklauf-Garnitur 3 in einem Eckbereich eines Raumes 10, bei dem die Heizungsrohre aus einer Wand des Raumes 10 hervortreten.

Ferner besitzt das Rücklauf-Anschlussstück 16, analog zu dem ersten Rücklauf-Anschlussstück 15, zwei parallel zueinander ausgerichtete Anschlussstutzen 31, 32 zur schweißtechnischen Verbindung der Vorlauf-Rücklauf-Garnitur 3 mit mindestens einer Heizplatte 2.

In einem ersten Schritt des erfindungsgemäßen Verfahrens zur Herstellung des erfindungsgemäßen Plattenheizkörpers 1, welcher in Figur 1 gezeigt ist, ist es vorgesehen, die Vorlauf-Rücklauf-Garnitur 3 an den Anschlussstutzen 21, 32 der Rücklauf-Anschlussstücke 15, 16 mittels Schweißen mit der ersten Heizplatte 2 zu verbinden. Analog wird das Anschlussstück 31 des zweiten Rücklauf-Anschlussstücks 16 mit der zweiten, nicht in den Figuren dargestellten, Heizplatte mittels Schweißen verbunden. Hierbei wird eine der beiden im Bereich des Sammelkanals 9 angeordnete Anschlussmöglichkeiten genutzt. Das erste Rücklauf-Anschlussstück 15 wird an der mittleren Auslassbohrung 12 und das zweite Rücklauf-Anschlussstück 16 an einer im Randbereich angeordneten Auslassbohrung 12 verankert.

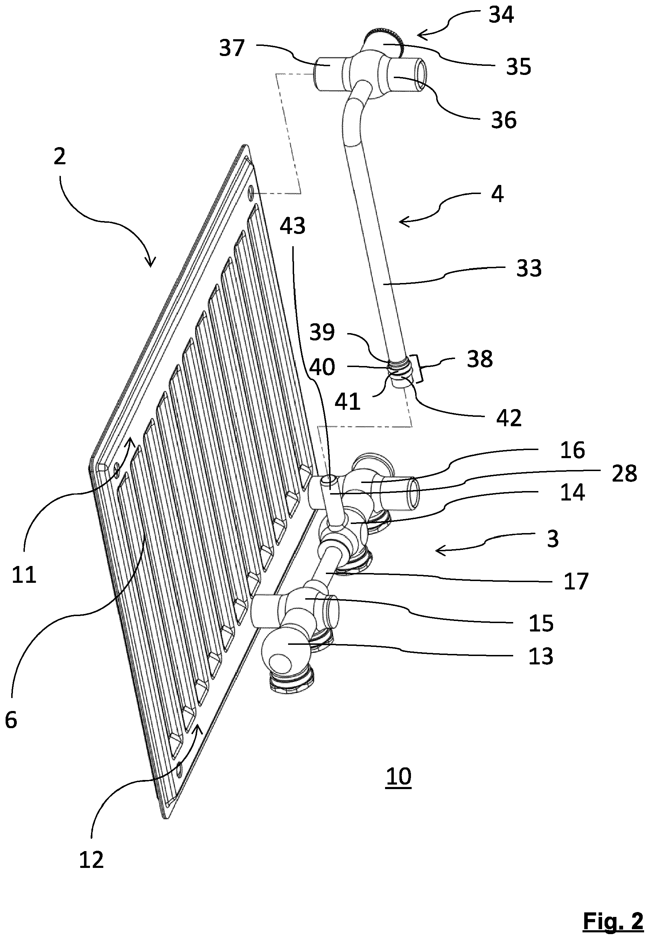

In einem zweiten Schritt des erfindungsgemäßen Verfahrens, welcher in Figur 2 dargestellt ist, wird die Steiggarnitur 4 mit der Vorlauf-Rücklauf-Garnitur 3 verbunden. Die Steiggarnitur 4 umfasst ein I-förmiges Steigrohr 33, an dessen umgebogenen Ende ein Verteil-Anschlussstück 34 angeordnet ist. Das Verteil-Anschlussstück 34 besitzt einen kugelabschnittsförmigen, hohlen Grundkörper, welcher mit einem Verbindungsstück 35 sowie zwei Anschlussstutzen 36, 37 versehen ist. Das Verbindungsstück 35 eignet sich zur alternativen strömungsmäßigen Verbindung des Steigrohrs 33 mit einem Heizfluid-Vorlauf und besitzt wieder ein Innengewinde.

An dem dem Verteil-Anschlussstück 34 abgewandten, freien Ende des Steigrohrs 33 ist ein Muffenstück 38 angeordnet. Das Muffenstück 38 ist hierbei als in zwei Stufen radial nach außen gegenüber einem übrigen Steigrohrdurchmesser erweiterter Abschnitt des Steigrohres 33 ausgebildet. Der erste erweitere Abschnitt 39 des Steigrohrs 33 dient hierbei als Anschlag für das in dem zweiten Vorlauf-Anschlussstück 14 verankerte Rohr 28. Der zweite erweitere Abschnitt 40 ist derart ausgebildet, dass ein Innendurchmesser des Muffenstücks 38 in diesem Bereich in etwa dem Außendurchmessers des Rohres 28 entspricht. Der Abschnitt 40 ist ferner ebenfalls mit zwei radial nach außen gegenüber einem Muffenstückdurchmesser erweiterten Abschnitten 41, 42 versehen, in welche jeweils ein Dichtelement in Form eines Dichtungsrings eingesetzt ist. Die im Innern des Muffenstücks 38 angeordneten, O-förmigen Dichtungsringe sind aus einem elastomeren Material gebildet.

In dem in der Figur 2 gezeigten zweiten Schritt des erfindungsgemäßen Verfahrens wird das Muffenstück 38 auf ein freies Ende 43 des Rohres 28 des zweiten Vorlauf-Anschlussstückes 14 geschoben. Der Außendurchmesser des Rohres 28 ist hierbei kleiner ausgebildet als der Innendurchmesser des Muffenstücks 38. Durch die beiden Dichtungsringe wird hierbei eine flüssigkeitsdichte Verbindung hergestellt.

Ferner wird in einem in Figur 2 gezeigten dritten Schritt des erfindungsgemäßen Verfahrens die Steiggarnitur 4 an ihrem Verteil-Anschlussstück 34 mittels des Anschlussstutzens 37 desselbigen mit der Heizplatte 2 mittels Schweißen mit der im Randbereich angeordneten Einlassbohrung 11 verbunden.

Der durch die vorstehend beschriebenen Verfahrensschritte hergestellte Plattenheizkörper 1 kann schließlich je nach durch die im zu beheizenden Raum 10 gegebenen Anschlussmöglichkeiten an den Heizfluid-Vorlauf und den Heizfluid-Rücklauf angeschlossen werden. Insbesondere besteht hierbei die Möglichkeit, die Vorlauf-Rücklauf-Garnitur 3 als Mittenanschlussgarnitur zu nutzen, bei der der Heizfluid-Vorlauf strömungsmäßig mit dem ersten Vorlauf-Anschlussstück 13 und der Heizfluid-Rücklauf strömungsmäßig mit dem ersten Rücklauf-Anschlussstück 15 verbunden werden. Das Heizfluid wird in diesem Fall von dem Heizfluid-Vorlauf über das erste Vorlauf-Anschlussstück 13 mittels des Vorlaufrohres 17 zu dem zweiten Vorlauf-Anschlussstück 14 und von dort aus über die Steiggarnitur 4 in den Verteilkanal 8 geleitet.

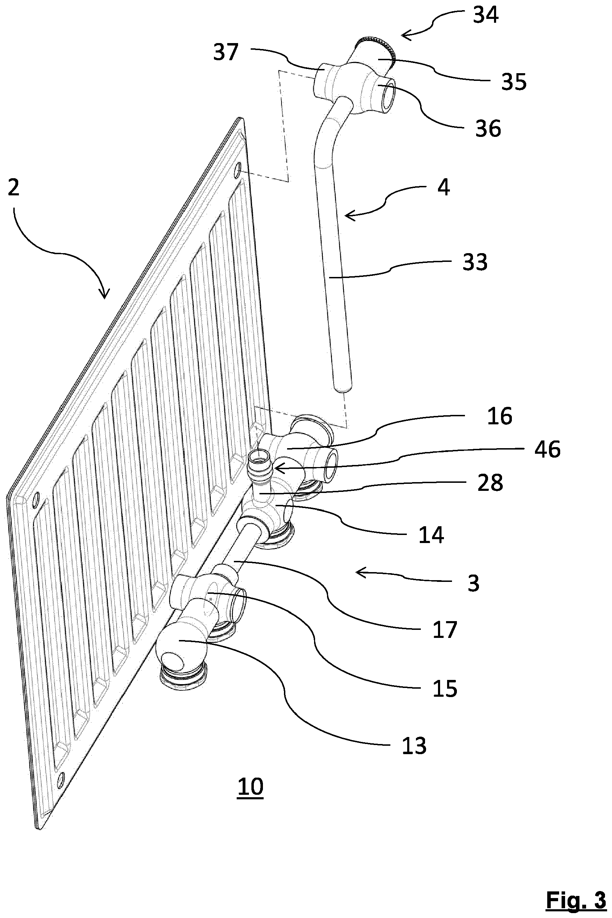

Die Figuren 3 bis 5 zeigen jeweils eine weitere erfindungsgemäße Vorlauf-Rücklauf-Garnitur 3 sowie eine erfindungsgemäße Steiggarnitur 4. Im Unterschied zu der vorstehend beschriebenen Vorlauf-Rücklauf-Garnitur 3 und der Steiggarnitur 4 ist die Verbindung zwischen der Steiggarnitur 4 und dem zweiten Vorlauf-Anschlussstück 14 derart ausgebildet, dass ein Muffenstück 46 nicht an dem Steigrohr 33, sondern an dem zweiten Vorlauf-Anschlussstück 14 angeordnet ist. Das Muffenstück 46 ist hierbei, wie in den Figuren 3 bis 5 gezeigt, an dem Rohr 28 des zweiten Vorlauf-Anschlussstücks 14 angeordnet. Das Muffenstück 46 ist rohrförmig ausgebildet und im Innern mit zwei umlaufenden Dichtringen versehen, welche in entsprechende Ausnehmungen eingesetzt sind. Die Dichtringe bewirken eine flüssigkeitsdichte Verbindung des Steigrohres 33 mit dem Muffenstück 46.

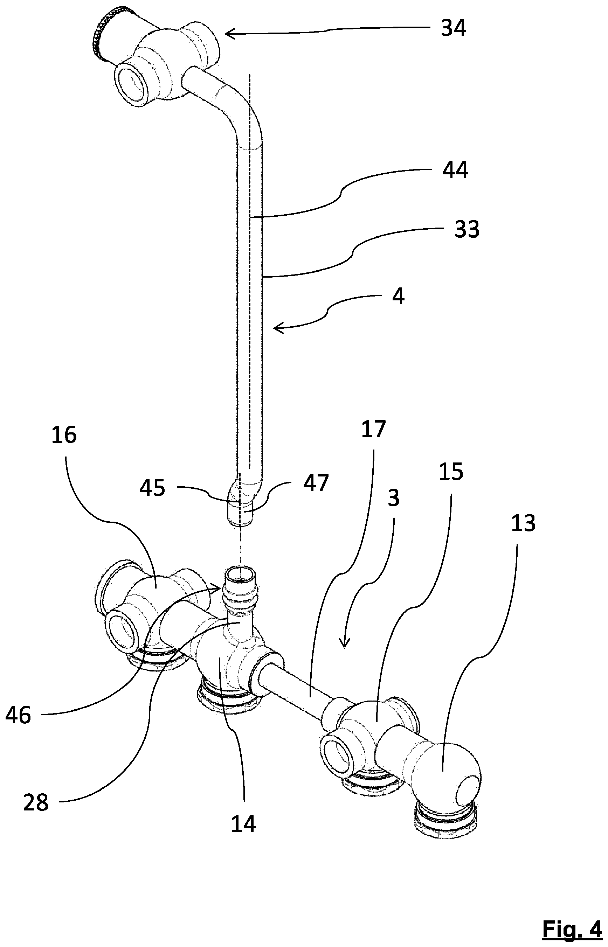

Das Steigrohr 33 ist hierbei ebenfalls I-förmig ausgebildet und ist, wie in Figur 4 gezeigt, an einem freien Ende 47 derart gebogen, dass eine vertikal verlaufende Längsachse 45 des freien Endes 47 versetzt zu einer Längsachse 44 des übrigens Steigrohres 46 verläuft. Hierdurch wird sichergestellt, dass bei einer Verbindung des Steigrohres 33 mit dem zweiten Vorlauf-Anschlussstück 14 lediglich das freie Ende 47 in das Muffenstück 46 eingelassen wird. Ebenso ist jedoch möglich, dass das freie Ende 47 des Steigrohres 33, wie in Figur 3 gezeigt, geradlinig verläuft.

Figur 5 zeigt einen vertikalen Schnitt durch die Vorlauf-Rücklauf-Garnitur 3 und die Steiggarnitur 4 aus Figur 4. Das erste Vorlauf-Anschlussstück 13 ist lediglich mit dem Grundkörper des ersten Rücklauf-Anschlussstücks 15 verschweißt. Das das erste und das zweite Vorlauf-Anschlussstück 13, 14 verbindende Vorlaufrohr 17 ist durch das erste Rücklauf-Anschlussstück 15 hindurch geführt und endet in dem Verbindungsstutzen 26 des zweiten Vorlauf-Anschlussstücks 14. Letzteres ist ebenfalls lediglich an dem zweiten Rücklauf-Anschlussstück 16 verschweißt. Folglich wird das Vorlaufrohr 17 in einem angeschlossenen Zustand der Vorlauf-Rücklauf-Garnitur 3 von dem Heizfluid umströmt.

### Bezugszeichenliste:

- 1: Plattenheizkörper
- 2: Heizplatte
- 3: Vorlauf-Rücklauf-Garnitur
- 4: Steiggarnitur
- 5: Blech
- 6: Vertiefung
- 7: Heizkanal
- 8: Verteilkanal
- 9: Sammelkanal
- 10: Raum
- 11: Einlassbohrung
- 12: Auslassbohrung
- 13: Vorlauf-Anschlussstück
- 14: Vorlauf-Anschlussstück
- 15: Rücklauf-Anschlussstück
- 16: Rücklauf-Anschlussstück
- 17: Vorlaufrohr
- 18: Verbindungsstutzen des ersten Vorlauf-Anschlussstücks
- 19: Verbindungsstück des ersten Vorlauf-Anschlussstücks
- 20: Verbindungsstück des ersten Rücklauf-Anschlussstücks
- 21: Anschlussstutzen des ersten Rücklauf-Anschlussstücks
- 22: Anschlussstutzen des ersten Rücklauf-Anschlussstücks
- 23: Kappe
- 24: Verbindungsstutzen des ersten Rücklauf-Anschlussstücks
- 25: Verbindungsstück des zweiten Vorlauf-Anschlussstücks
- 26: Verbindungsstutzen des zweiten Vorlauf-Anschlussstücks
- 27: Verbindungsstutzen des zweiten Vorlauf-Anschlussstücks
- 28: Rohr
- 29: Verbindungsstück des zweiten Vorlauf-Anschlussstücks
- 30: Verbindungsstück des zweiten Vorlauf-Anschlussstücks
- 31: Anschlussstutzen des zweiten Vorlauf-Anschlussstücks
- 32: Anschlussstutzen des zweiten Vorlauf-Anschlussstücks
- 33: Steigrohr
- 34: Verteil-Anschlussstück
- 35: Verbindungsstück des Verteil-Anschlussstücks
- 36: Anschlussstutzen des Verteil-Anschlussstücks
- 37: Anschlussstutzen des Verteil-Anschlussstücks
- 38: Muffenstück
- 39: erster Abschnitt
- 40: zweiter Abschnitt
- 41: dritter Abschnitt
- 42: vierter Abschnitt
- 43: freies Ende
- 44: Längsachse des Steigrohres
- 45: Längsachse des freien Endes
- 46: Muffenstück
- 47: freies Ende

## Patentansprüche

1. Verfahren zur Herstellung eines Plattenheizkörpers (1), der Plattenheizkörper (1) umfassend
- mindestens eine Heizplatte (2) mit einem Verteilkanal (8), einem Sammelkanal (9) und einer Mehrzahl von zwischen dem Verteilkanal (8) und dem Sammelkanal (9) sowie ungefähr senkrecht zu den beiden verlaufenden Heizkanälen (7),
- zwei voneinander beabstandete und mittels eines Vorlaufrohres (17) miteinander verbundene Vorlauf-Anschlussstücke (13, 14), jeweils zum Anschluss an einen Heizfluid-Vorlauf sowie zwei mit der mindestens einen Heizplatte (2) im Bereich des Sammelkanals (9) strömungsmäßig verbundene Rücklauf-Anschlussstücke (15, 16), jeweils zum Anschluss an einen Heizfluid-Rücklauf, wobei die Vorlauf-Anschlussstücke (13, 14), die Rücklauf-Anschlussstücke (15, 16) und das Vorlaufrohr (17) zu einer Vorlauf-Rücklauf-Garnitur (3) verbunden sind,
- eine Steiggarnitur (4), die mindestens ein strömungsmäßig mit dem Verteilkanal (8) verbundenes Verteil-Anschlussstück (34) aufweist, das mittels eines Steigrohrs (33) an einem der Vorlauf-Anschlussstücke (13, 14) der Vorlauf-Rücklauf-Garnitur (3) befestigt ist, wobei das Steigrohr (33) an einem dem Verteil-Anschlussstück (34) abgewandten Ende strömungsmäßig mit einem der Vorlauf-Anschlussstücke (13, 14) der Vorlauf-Rücklauf-Garnitur (3) verbunden ist,
mit den folgenden Verfahrensschritten:
- Die Vorlauf-Rücklauf-Garnitur (3) wird zumindest an den Rücklauf-Anschlussstücken (15, 16) mit der mindestens einen Heizplatte (2) durch Schweißen verbunden
- Die Steiggarnitur (4) wird mit der Vorlauf-Rücklauf-Garnitur (3) verbunden
- Die Steiggarnitur (4) wird an ihrem Verteil-Anschlussstück (34) mit der mindestens einen Heizplatte (2) durch Schweißen verbunden,
**dadurch gekennzeichnet, dass**
- die Steiggarnitur (4) mit einem Endabschnitt des Steigrohres (33) in ein Muffenstück (46) der Vorlauf-Rücklauf-Garnitur (3) dichtend eingeschoben oder die Steiggarnitur (4) mit einem an einem dem Verteil-Anschlussstück (34) abgewandten Ende des Steigrohres (33) angeordneten Muffenstück (38) auf ein freies Ende (43) eines Rohres (28), das strömungsmäßig mit einem der Vorlauf-Anschlussstücke (13, 14) verbunden ist, aufgeschoben wird.

2. Verfahren nach Anspruch 1, **dadurch gekennzeichnet, dass** der Plattenheizkörper (1) zwei Heizplatten (2) umfasst und die zweite Heizplatte durch Schweißen mit mindestens einem der Rücklauf-Abschlussstücke (15, 16) der Vorlauf-Rücklauf-Garnitur (3) und dem Verteil-Anschlussstück (34) der Steiggarnitur (4) verbunden wird.

3. Plattenheizkörper (1) umfassend
- mindestens eine Heizplatte (2) mit einem Verteilkanal (8), einem Sammelkanal (9) und einer Mehrzahl von zwischen dem Verteilkanal (8) und dem Sammelkanal (9) sowie ungefähr senkrecht zu den beiden verlaufenden Heizkanälen (7),
- zwei voneinander beabstandete und mittels eines Vorlaufrohres (17) miteinander verbundene Vorlauf-Anschlussstücke (13, 14), jeweils zum Anschluss an einen Heizfluid-Vorlauf sowie zwei mit der mindestens einen Heizplatte (2) im Bereich des Sammelkanals (9) strömungsmäßig verbundene Rücklauf-Anschlussstücke (15, 16), jeweils zum Anschluss an einen Heizfluid-Rücklauf, wobei die Vorlauf-Anschlussstücke (13, 14), die Rücklauf-Anschlussstücke (15, 16) und das Vorlaufrohr (17) zu einer Vorlauf-Rücklauf-Garnitur (3) verbunden sind,
- eine Steiggarnitur (4), die mindestens ein strömungsmäßig mit dem Verteilkanal (8) verbundenes Verteil-Anschlussstück (34) aufweist, das mittels eines Steigrohrs (33) an einem der Vorlauf-Anschlussstücke (13, 14) der Vorlauf-Rücklauf-Garnitur (3) befestigt ist, wobei das Steigrohr (33) an einem dem Verteil-Anschlussstück (34) abgewandten Ende strömungsmäßig mit einem der Vorlauf-Anschlusstücke (13, 14) der Vorlauf-Rücklauf-Garnitur (3) verbunden ist,
**dadurch gekennzeichnet, dass**
- die Steiggarnitur (4) mit einem Endabschnitt des Steigrohres (33) in ein Muffenstück (46) der Vorlauf-Rücklauf-Garnitur (3) dichtend eingeschoben oder die Steiggarnitur (4) mit einem an einem dem Verteil-Anschlussstück (34) abgewandten Endabschnitt des Steigrohres (33) angeordneten Muffenstück (38) auf ein freies Ende (43) eines Rohres (28), das strömungsmäßig mit einem der Vorlauf-Anschlussstücke (13, 14) verbunden ist, dichtend aufgeschoben ist.

4. Plattenheizkörper (1) nach Anspruch 3, **dadurch gekennzeichnet, dass** in dem Muffenstück (46) der Vorlauf-Rücklauf-Garnitur (3) oder in dem Muffenstück (38) an dem Endabschnitt des Steigrohrs (33) der Steiggarnitur (4), vorzugsweise in einem angepassten, sich radial nach außen gegenüber dem übrigen Muffendurchmesser erweiternden Abschnitt (41, 42) ein Dichtelement, vorzugsweise in Form eines aus einem elastomeren Material bestehenden Dichtungsrings, weiter vorzugsweise eines O-Rings, angeordnet ist.

5. Plattenheizkörper (1) nach Anspruch 3 oder 4, **dadurch gekennzeichnet, dass** das Verteil-Anschlussstück (34) mit einem Verbindungsstück (35) zur strömungsmäßigen Verbindung mit einem Heizfluid-Vorlauf versehen ist.

6. Plattenheizkörper (1) nach einem der Ansprüche 3 bis 5, **dadurch gekennzeichnet, dass** die Vorlauf-Rücklauf-Garnitur (3) mit mindestens zwei, vorzugsweise drei, Verbindungsstücken (20, 29, 30) zur strömungsmäßigen Verbindung mit einem Heizfluid-Rücklauf versehen ist.

7. Plattenheizkörper (1) nach einem der Ansprüche 3 bis 6, **dadurch gekennzeichnet, dass** mindestens ein Rücklauf-Anschlussstück (16) in einem angeschlossenen Zustand in einem Eckbereich der Heizplatte (2) angeordnet ist.

8. Plattenheizkörper (1) nach einem der Ansprüche 3 bis 7, **dadurch gekennzeichnet, dass** die Vorlauf-Anschlusstücke (13, 14), die Rücklauf-Anschlussstücke (15, 16) und das Vorlaufrohr (17) fest, insbesondere stoffschlüssig, insbesondere durch Schweißen, Löten oder Kleben, oder reibschlüssig, insbesondere durch Verpressen, zu der Vorlauf-Rücklauf-Garnitur (3) verbunden sind, so dass eine Längenänderung in Richtung des Vorlaufrohrs (17) unterbunden ist.
